# EUROPEAN PATENT SPECIFICATION

(11) **EP 2 798 746 B1**
(45) Date of publication and mention of the grant of the patent: **16.05.2018**
(21) Application number: 11878966.8
(22) Date of filing: 29.12.2011
(51) Int. Cl.: H04B 1/3827, H04B 7/04, H01Q 1/24, H04W 52/42

(54) **WIRELESS DEVICE AND METHOD FOR ANTENNA SELECTION**
DRAHTLOSE VORRICHTUNG UND ANTENNENAUSWAHLVERFAHREN
DISPOSITIF SANS FIL ET MÉTHODE DE SÉLECTION D'ANTENNE

(43) Date of publication of application: 05.11.2014
(73) Proprietor: Intel Corporation, Santa Clara, CA 95052 (US)
(72) Inventor: YANG, Songnan, San Jose, California 95123 (US)
(74) Representative: HGF Limited
(86) International application number: PCT/US2011/067928
(87) International publication number: WO 2013/101106

(56) References cited:
- WO-A1-2013/090716
- CN-A- 102 270 999
- KR-A- 20050 024 090
- KR-A- 20070 071 549
- US-A1- 2004 214 621
- US-A1- 2004 248 523
- US-A1- 2011 250 928

## Description

### TECHNICAL FIELD

This document pertains generally, but not by way of limitation, to antenna selection techniques for wireless communication.

### BACKGROUND

Wireless communication devices are subject to various regulatory requirements before they may be manufactured for sale, sold, or used. Such regulatory requirements may specify human exposure limits for electromagnetic energy that may be emitted from such communication devices. Such communication devices may include cellular communication devices such as "smart" phones, digital or analog radio communication systems, portable computers such as laptops, tablet devices such as including a touch-screen, or a variety of other devices.

Regulatory limits related to human exposure to electromagnetic energy from wireless devices may be specified in terms of a Specific Absorption Rate (SAR). SAR generally refers to an integral over a sample volume of a ratio of an electric field intensity times a conductive of the sample, divided by a density of the sample. The sample might include a tissue-simulating slab such as emulating or shaped like a human body, a human torso, a human head, or one or more appendages such as arms or hands. SAR may be experimentally determined via measurement, or estimated via simulation. For example, an electric field intensity may be measured or simulated, and SAR may then be determined such as for a known sample conductivity, volume, or material density. SAR is generally specified in terms of power dissipation per unit mass, such as in Watts per Kilogram (W/kg) in the S.I. unit system. For example, the United States Federal Communications Commission (FCC) has adopted SAR exposure limits such as generally specified in ANSI/IEEE C95.1-1992, but such exposure limits may be revised or may differ from one region to another.

During regulatory approval testing, such measurement or simulation may include using a tissue-simulating model having characteristics similar to a human test subject. Such a model may be referred to as a "phantom."

US 2011/250928 refers to determining whether a user's body or other external object is within a given distance of an antenna of a portable electronic device by making impedance measurements using signal phase and magnitude monitoring circuitry coupled to the antenna. The electronic device may include other sensors, data from which may be used in addition to the antenna impedance measurements to determine whether an external object is in the vicinity of the antenna.

WO 2013/090716, published after the present application was filed, refers to selecting one of a plurality of transmit antennas dependent upon orientation of a user device. Additional information whether a user device is in proximity with a human body part, may be used to help determine what transmit power levels should be used. This additional information may also be used to determine which antennas are to be used for data transmission and which antennas to be used for data reception.

According to a first aspect of the invention, there is provided a portable wireless device, as claimed in claim 1.

According to a second aspect of the invention, there is provided a method for antenna selection in a portable wireless device, as claimed in claim 12.

Further embodiments of the invention are included in the dependent claims.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates generally an embodiment, such as a portion of a portable wireless device, which may include one or more processors, and one or more memory circuits.
FIG. 2 illustrates generally an embodiment, such as a portable wireless device, that may include a tissue proximity detection circuit and an antenna control circuit.
FIG. 3 illustrates generally a technique, such as a method, that may include obtaining information indicative of a presence or absence of human tissue and controllably inhibiting transmission by an antenna in response to the obtained information.
FIG. 4 illustrates generally an illustrative embodiment of a technique, such as a method, that may include detecting a presence or absence of human tissue nearby a proximity sensor and in response, selecting an antenna for use in transmission.

### DETAILED DESCRIPTION

Conformity to a regulatory SAR exposure limit for electromagnetic emissions may be quite challenging for wireless communication devices having an embedded wireless radio. Such a radio may include one or more of a second-generation (2G) digital radio, such as a Global System for Mobile communication (GSM) digital radio, a wide-area-network (WWAN) radio, such as a third-generation or fourth-generation (3G/4G) digital radio, or one or more other communication circuits.

In one approach, testing of such a tablet assembly may include power "throttling," or adjusting a transmit power such as using a fixed attenuation factor determined during regulatory testing or using a power level adjusted dynamically in response to obtained information about a proximity of human tissue to the antenna.

The present inventor has recognized, among other things, that such a fixed or dynamic power reduction may adversely impact wireless communication performance, such as causing unwanted dropouts, an unwanted reduction in usable wireless communication range, an unwanted reduction in a rate of communication, or other unwanted effects. The present inventor has also recognized that providing multiple transmission antenna locations around a portable communications device housing reduces the likelihood that all antennas will be located near tissue simultaneously. In an embodiment, a transmission antenna may be selected using information about an absence or presence of human tissue nearby the antenna.

Use of transmit antenna selection techniques, such as discussed in the embodiments above and below may generally improve a user's perception of wireless communication performance such as by allowing a portable wireless device to maintain a desired total radiated power (TRP) without violation of regulatory exposure limits.

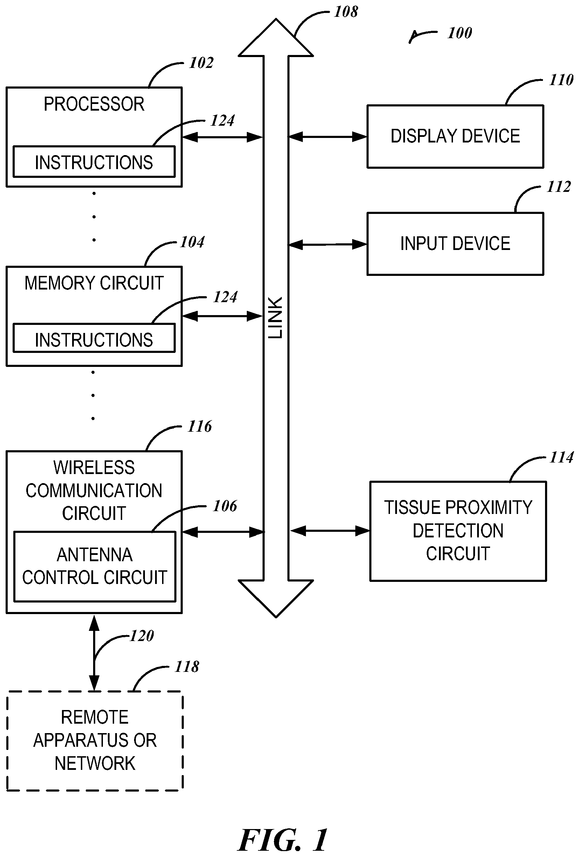

FIG. 1 illustrates generally an embodiment, such as a portion of a portable wireless device 100, which may include one or more processors and one or more memory circuits. For example, the portable wireless device 100 may include a processor 102 and a memory circuit 104. One or more of the processor 102 or memory circuit 104 may include instructions 124 that cause the portable wireless device 100 to perform operations, such as discussed in one or more embodiments below.

In an embodiment, the portable wireless device 100 may include a wireless communication circuit 116, such as including one or more wireless transceivers. The wireless communication circuit 116 may be configured to operate in accordance with one or more wireless standards. For example, the wireless communication circuit may be configured to wirelessly transfer information between the portable wireless device 100 and a remote apparatus or network 118 via a communication link 120. Such a communication link 120 may be established in accordance with one or more communications standards, such as a second-generation (2G) digital wireless communication standard, such as a GSM or GSM-derived standard, a third-generation (3G) standard, a fourth-generation (4G) standard, or in accordance with one or more other standards or protocols.

Such a 3G or 4G digital wireless communication standard may include one or more of a WiMax communication standard (e.g., in accordance with the IEEE 802.16 family of standards such as IEEE 802.16-2009), a Third-Generation Partnership Project (3GPP) Long-Term-Evolution (LTE) communication standard, or one or more other standards or protocols. In an embodiment, the wireless communication circuit may be configured to wireless transfer information in accordance of a Wi-Fi wireless local-area-networking (WLAN) standard, such as one or more of the IEEE 802.11 family of standards (e.g., IEEE. 802.11a-1999, 802.11b-1999, 802.11g-2003, 802.11n-2009, 802.11-2007), or one or more other standards or protocols.

In an embodiment, one or more of the processor 102, memory circuit 104, or wireless communication circuit 116 may be coupled to other portions of the portable wireless device 100 such as via a link 108. For example, the portable wireless device 100 may include a display device 110 or an input device 112. The portable wireless device 100 may include one or more of a laptop or handheld computing assembly, a tablet assembly, a cellular communication device, a digital radio, or one or more other assemblies or devices.

In an embodiment, the portable wireless device 100 may include a tissue proximity detection circuit, such as configured to detect a presence or absence of human tissue in proximity to one or more portions of the portable wireless device. In an embodiment, the portable wireless device 100 may include an antenna control circuit 106, such as coupled to the wireless communication circuit. The antenna control circuit 106 may be configured to select or adjust a transmit antenna, a receive antenna, or other communication parameters such as a transmit power, such as in response to information obtained from the tissue proximity detection circuit 114.

In an embodiment, one or more of the processor 102, the memory circuit 104, the wireless communication circuit 116, the antenna control circuit 106, the tissue proximity detection circuit 114, or one or more other devices or modules, may be co-integrated on or within a commonly-shared integrated circuit (IC) die, integrated circuit package, IC chipset, or module.

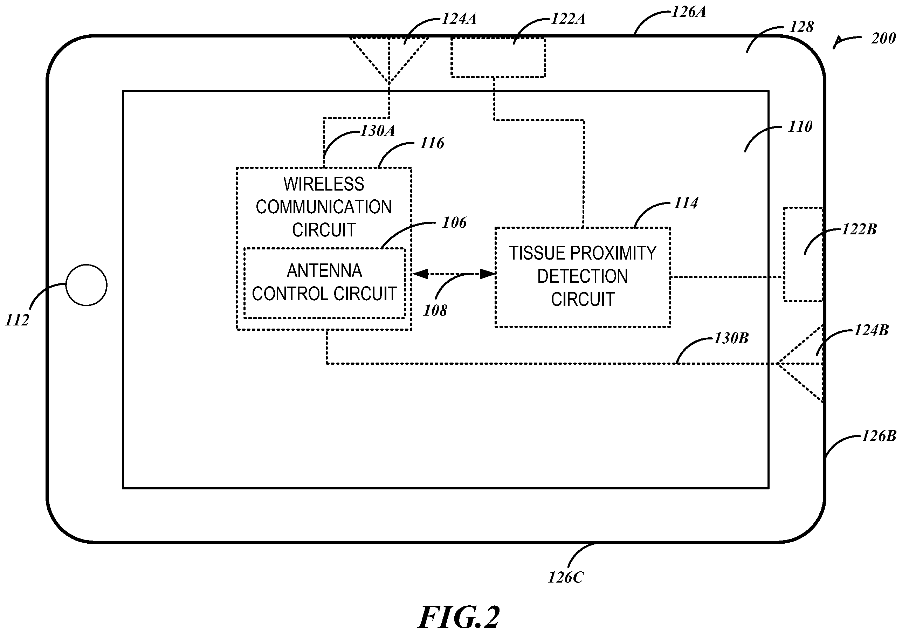

FIG. 2 illustrates generally an embodiment, such as a portable wireless device 200, that may include a tissue proximity detection circuit 114 and an antenna control circuit 116. Similar to the embodiments discussed above with respect to FIG. 1, the portable wireless device 200 may include one or more of a tablet assembly or a cellular communication device (e.g., a tablet computer or e-reader, a smart-phone, etc.). In an embodiment, the portable wireless device 200 may include a housing 128, such as including a display 110, and one or more user inputs such as a pushbutton 112. In an embodiment, the display 110 may also be used as a user input, such as including a touch-screen display.

As discussed above, the present inventor has recognized, among other things, that such a fixed or dynamic transmission power reduction may adversely impact wireless communication performance. The present inventor has also recognized that transmit antenna selection may be used in addition to power adjustment, or instead of power adjustment, such as during regulatory SAR certification testing, carrier compliance testing, or during end-use by a user.

In an embodiment, the housing 128 may include a first antenna 124A, such as located near a first proximity sensor 122A, such as on or within a first edge 126A of the housing 128. Similarly, a second antenna 124B may be located on or within a second edge 126B of the housing 128, such as located near a second proximity sensor 122B. One or more of the first or second proximity sensors 122A through 122B may be communicatively coupled to a tissue proximity detection circuit 114. One or more of the first or second antennas 124A through 124B may be communicatively coupled to a wireless communication circuit 116.

SAR testing of electromagnetic emissions for regulatory approval may involve placing a device-under-test (DUT) in a variety of configurations nearby or against a tissue-simulating phantom. For notebook computing devices, such testing may not be required at all because such computing devices might include an antenna that may be located more than 20 centimeters away from human tissue in most usage scenarios. A smart-phone or other cellular device may be allowed to be tested nearby the tissue simulating phantom, such as with a 20 millimeter spacing. A tablet assembly, such as the portable wireless device 200 of FIG. 2, may face the most stringent test requirements, such as being tested with zero clearance between the tissue simulating phantom and a back of the housing 128.

In one approach, a transmission power level may be adjusted to achieve compliance with SAR exposure thresholds, such as not to exceed a SAR exposure threshold. For example, in an assembly having only a single antenna or having antennas located along a single edge, the tissue proximity detection circuit 114 may provide information about such proximity of human tissue to the antenna control circuit 106. In response, the antenna control circuit 106 may reduce a transmit power level, such as to avoid exceeding a specified SAR threshold during transmission in proximity to the human tissue. When human tissue comes within a specified range of a proximity sensor (e.g., within about 10 mm of the first proximity sensor 122A), the wireless communication circuit 116 may reduce a transmission power output to the first antenna 124A by a specified amount, such as including a reduction of several decibels.

In another approach, a fixed attenuation factor (e.g., a fixed reduction in transmission power) may be determined during regulatory testing so that the transmission power always remains below a specified threshold SAR under all anticipated usage conditions, regardless of human tissue proximity.

Unlike approaches including power adjustment alone, one or more of the antennas such as the first or second antennas 124A through 124B may be selected to provide reception and transmission, such as in the absence of nearby human tissue, or reception alone, such as in the presence of nearby human tissue. Such antenna selection may be used to maintain a high total radiated power (TRP), even in the presence of human tissue nearby one or more of the first through third edges 126A through 126C.

In the illustrative embodiment shown in FIG. 2, the first antenna 124A may be located on the first edge 126A at an angle perpendicular to the second antenna 124B or the second edge 126B. In an embodiment, one or more of the first or the second antennas 124A through 124B may located opposite each other, such as including locating the second antenna 124B on a third edge 126C opposite the first edge 126A. In an embodiment, one or more of the first and second antennas 124A through 124B may be used for transmission or receipt of electromagnetic energy, such as controlled using an antenna control circuit 106.

In an embodiment, one or more techniques may be used to obtain information indicative of the presence or absence of human tissue on or nearby the housing 128 of the portable wireless device 200. For example, one or more of the first or second proximity sensors 122A through 122B may include a conductive sensor (e.g., an electrode), a capacitive sensor, a mechanical switch, an optical sensor, an acoustic sensor, or one or more other sensing modalities. In an embodiment, information obtained from multiple sensing modalities may be used such as to increase a confidence level that human tissue is present or absent within a specified range of a respective proximity sensor.

In an embodiment, the tissue proximity detection circuit 114 may use information about an electrical characteristic of one or more of the first antenna 124A or second antenna 124B in addition, or instead of, using the first proximity sensor 122A or the second proximity sensor 122B. For example, one or more of a return loss (e.g., a reflected power), an input impedance, or one or more other electrical characteristics of the first or second antennas 124A through 124B may be monitored.

A change in an electrical characteristic, such as an increase or a decrease in return loss, a change in impedance beyond a specified range or threshold (e.g., a magnitude, a phase, a real part, or an imaginary part), or one or more other electrical characteristics may be used such as to provide information indicative of a presence or absence of human tissue respectively nearby first antenna 124A or the second antenna 124B. In an illustrative example, amplitude or phase information about power reflected from an antenna may be monitored such as a via a directional coupler included in-line with an antenna feed, such as a first feed 130A or a second feed 130B, coupling the antenna to the wireless communication circuit 116.

In an illustrative embodiment, the wireless communication circuit 116 may include a receive front-end, such as including one or more receive ports, and transmit front-end, such as including one or more transmit ports. A solid-state or mechanical switch may be used, such as controlled by the antenna control circuit 106, such as to controllably isolate or connect one or more of the first or second antennas 124A through 124B to one or more of a transmit port or a receive port of the wireless communication circuit 116.

In an illustrative embodiment, the wireless communication circuit 116 may include a transmit/receive port, and a receive-only port. In such an embodiment, the antenna control circuit 106 may controllably connect one of the first or second antennas 124A through 124B to the receive-only port when human tissue is detected within a specified range of the corresponding antenna, such as inhibiting transmission by the antenna connected to the receive-only port.

In an embodiment, and as discussed above in relation to FIG. 1, one or more of the tissue proximity detection circuit 114, wireless communication circuit 116, or antenna control circuit 106 may be co-integrated or included as separate modules. For example, one or more of the tissue proximity detection circuit or antenna control circuit 106 may be separate from the wireless communication circuit, such as included in-line with one or more antenna feeds coupled respectively between an antenna and the wireless communication circuit 116. In an embodiment, tissue proximity detection circuit may provide antenna selection information to one or more of the wireless communication circuit 116, or a separate switch module, such as a double-pole-double-throw radio-frequency (RF) switch.

In an illustrative embodiment, such as in a WWAN application including multi-input multi-output (MIMO) communication, more than two antennas may be included in the portable wireless device 200. In an illustrative example of a 2x2 MIMO system, (e.g., an 2x2 MIMO LTE system), in any SAR testing orientation, the two antennas furthest away from the phantom or user's tissue may be selected for 2x2 communication. If no two antennas are available that are far away from the phantom or user tissue, the portable wireless device may fall back to 1x2 MIMO, such as receiving using two antennas, but transmitting with only a single antenna located away from tissue, or transmitting at reduced power if no antennas are sufficiently far away from tissue. Higher-order MIMO implementations may also be used, such as via correspondingly increasing the number of available antennas or proximity sensors. For example, one or more antennas may also be located on a back face of the portable wireless device 200.

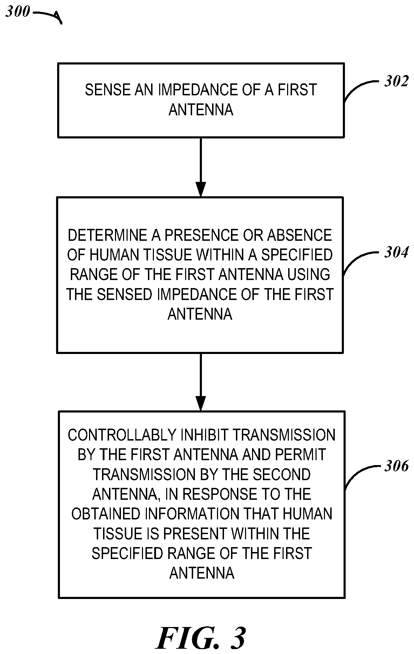

FIG. 3 illustrates generally a technique 300, such as a method, that may include obtaining information indicative of a presence or absence of human tissue and controllably inhibiting transmission by an antenna in response to the obtained information. In an embodiment, at 302, information may be obtained, the information indicative of the presence or absence of human tissue within a specified range of a first or a second antenna. Such information may include sensing an impedance of a first antenna, such as using apparatus or devices discussed above with respect to FIGS. 1 through 2.

At 304, a presence or absence of human tissue within a specified range of the first antenna may be determined, such as using the sensed impedance of the first antenna.

At 306, transmission by the first antenna may be inhibited, such as in response to the obtained information indicative of the presence of human tissue nearby within a specified range. For example, when a body region (e.g., a torso, a hand, a lap, or an appendage) is located on or near one or more antennas, another more far away antenna may be used instead (or additionally). In an embodiment, transmission by the second antenna may still be permitted.

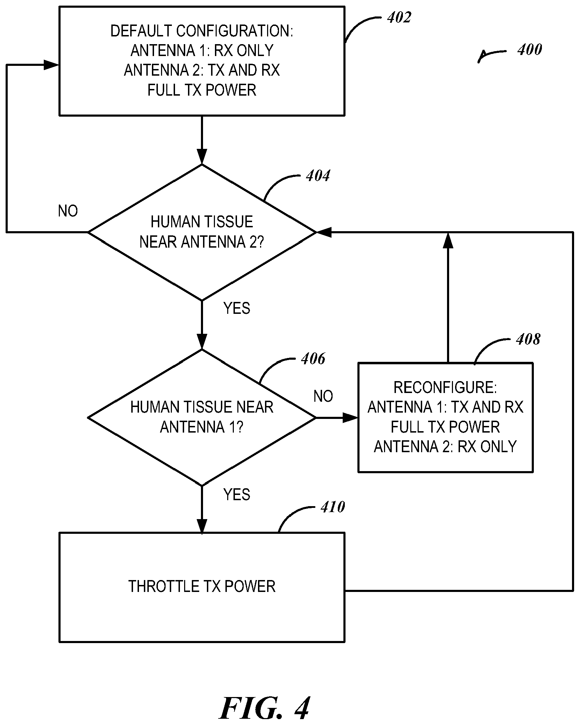

In an embodiment, the first antenna may still be permitted to operate as a receive antenna, despite the information indicative of nearby tissue. Other operational schemes may be used, such as discussed above or below, such as in FIG. 4.

FIG. 4 illustrates generally a technique 400, such as a method, that may include detecting a presence or absence of human tissue nearby a proximity sensor and in response, selecting an antenna for use in transmission.

In an illustrative example, such as including apparatus or techniques such as discussed above in FIGS. 1-3, at 402, a default configuration of a portable wireless device may include using a first antenna in a receive-only mode. A second antenna may be used in both a transmit and a receive mode. A transmit (TX) power may be set to a specified level, such as a "full TX power." At 404, if human tissue is not detected within a specified range of the second antenna, the TX power level remains at "full TX power."

If, at 406, human tissue is not detected within a specified range of the first antenna, then, at 408, the first antenna may now be used in both a transmit and a receive mode, and the second antenna may be restricted to a receive-only mode, such as to avoid exceeding a specified SAR exposure threshold in tissue that may be located next to the second antenna as identified at 404. In an embodiment, if human tissue was identified within a specified range of both the first antenna and the second antenna, then at 410, the TX power level may be controllably adjusted (e.g., throttled), such as to maintain compliance with a specified SAR exposure threshold despite the presence of tissue nearby both the first antenna and the second antenna.

### Various Notes and Examples

Example 1 can include subject matter (such as an apparatus, a method, a means for performing acts, or a machine readable medium including instructions that, when performed by the machine, that can cause the machine to perform acts), such as may include a portable wireless device comprising a tissue proximity detection circuit to provide information indicative of a presence or absence of human tissue within a specified range of a first antenna, an antenna control circuit to controllably inhibit transmission by the first antenna and to permit transmission by a second antenna and a third antenna, in response to information provided by the tissue proximity detection circuit that human tissue is present within the specified range of the first antenna, and a wireless communication circuit communicatively coupled to the antenna control circuit, the wireless communication circuit to wirelessly transfer information in accordance with a MIMO multi-input multi-output communication scheme using the second and third antennas for transmission and at least two of the first, second, or third antennas for receiving.

Example 2 can include, or can optionally be combined with the subject matter of Example 1, to optionally include a housing, a first antenna located on a first edge of the housing, and a second antenna located on a second edge of the housing.

Example 3 can include, or can optionally be combined with the subject matter of one or any combination of Examples 1 or 2 to optionally include a housing comprising a tablet device housing, the first antenna located on a first edge in or near a position on or near a body of a user, the second antenna located on a second edge more distal to the position on or near the body of the user.

Example 4 can include, or can optionally be combined with the subject matter of one or any combination of Examples 1 through 3 to optionally include a housing comprising a tablet device housing, a first antenna located on a first edge and a second antenna located on a second edge, the first and second edges substantially perpendicular to each other.

Example 5 can include, or can optionally be combined with the subject matter of one or any combination of Examples 1 through 4 to optionally include a housing comprising a tablet device housing, a first antenna located on a first edge and a second antenna located on a second edge, the first and second edges are located opposite each other.

Example 6 can include, or can optionally be combined with the subject matter of one or any combination of Examples 1 through 5 to optionally include a tissue proximity detection circuit configured to detect a presence or absence of human tissue within the specified range using one or more of an optical tissue sensor, a conductive tissue sensor, or an acoustic tissue sensor.

Example 7 can include, or can optionally be combined with the subject matter of one or any combination of Examples 1 through 6 to optionally include a tissue proximity detection circuit configured to detect a presence or absence of human tissue within the specified range via monitoring one or more electrical characteristics of the first antenna to detect the presence or absence of tissue.

Example 8 can include, or can optionally be combined with the subject matter of one or any combination of Examples 1 through 7 to optionally include one or more electrical characteristics comprising one or more of an input impedance of the first antenna or a return loss of the first antenna.

Example 9 can include, or can optionally be combined with the subject matter of one or any combination of Examples 1 through 8 to optionally include a tissue proximity detection circuit configured to provide information indicative of a presence or absence of human tissue within a specified range of the second antenna, and an antenna control circuit configured to controllably inhibit transmission by the second antenna, and to allow transmission by the first antenna, in response to information provided by the tissue proximity detection circuit that human tissue is present within the specified range of the second antenna but not within the specified range of the first antenna.

Example 10 can include, or can optionally be combined with the subject matter of one or any combination of Examples 1 through 9 to optionally include an antenna control circuit configured to controllably adjust a transmission power used by one or more of the first or second antennas in response to information provided by the tissue proximity detection circuit that human tissue is present within a specified range of both the first and second antennas.

Example 11 can include, or can optionally be combined with the subject matter of one or any combination of Examples 1 through 10 to optionally include a tissue proximity detection circuit configured to provide information indicative of a presence or absence of human tissue within a specified range of the second antenna, an antenna control circuit configured to controllably inhibit transmission by the first antenna and the second antenna, and to permit transmission by the third antenna, in response to the obtained information that human tissue is present within a specified range of both the first and second antennas, and a wireless communication circuit configured to wirelessly transfer information in accordance with a communication scheme using the third antenna for transmission, and at least two of the first, second, or third antennas for receiving.

Example 12 can include, or can optionally be combined with the subject matter of one or any combination of Examples 1 through 11 to optionally include an antenna control circuit comprising a mechanical or a solid-state switch, the antenna control circuit configured to controllably inhibit transmission by the first antenna using the switch.

Example 13 can include, or can optionally be combined with the subject matter of one or any combination of Examples 1 through 12 to optionally include a wireless communication circuit, the wireless communication circuit configured to wirelessly transfer digital information electromagnetically between the portable device and the remote apparatus in accordance with at least one of a second-generation (2G), a third-generation (3G), or a fourth-generation (4G) digital wireless communication standard.

Example 14 can include, or can optionally be combined with the subject matter of one or any combination of Examples 1 through 13 to optionally include a wireless communication standard including a WiMax communication standard or a 3GPP LTE communication standard.

Example 15 can include, or can optionally be combined with the subject matter of one or any combination of Examples 1-14 to include, subject matter (such as an apparatus, a method, a means for performing acts, or a machine readable medium including instructions that, when performed by the machine, that can cause the machine to perform acts), such as can include a portable wireless device comprising at least one processor circuit, a memory circuit coupled to at least one processor circuit, the memory circuit including processor-readable instructions that, when performed by at least one processor circuit, cause the at portable wireless device to obtain information indicative of the presence or absence of human tissue within a specified range of the first or the second antenna using a tissue proximity detection circuit and controllably inhibit transmission by the first antenna, and to allow transmission by the second antenna, in response to the obtained information that human tissue is present within the specified range of the first antenna.

Example 16 can include, or can optionally be combined with the subject matter of Example 15, to optionally include a memory circuit including instructions that cause the portable wireless device to obtain information indicative of a presence or absence of human tissue within a specified range of the second antenna, and controllably inhibit transmission by the second antenna and allow transmission by the first antenna, in response to the obtained information that human tissue is present within the specified range of the second antenna but not within the specified range of the first antenna.

Example 17 can include, or can optionally be combined with the subject matter of one or any combination of Examples 15 or 16 to optionally include a memory circuit including instructions that cause the portable wireless device to adjust a transmission power used by one or more of the first or second antennas in response to the obtained information that human tissue is present within a specified range of both the first and second antennas.

Example 18 can include, or can optionally be combined with the subject matter of one or any combination of Examples 15 through 17 to optionally include a transmission power specified to provide a Specific Absorption Rate that falls at or below an exposure threshold established by ANSI/IEEE C95.1-1992.

Example 19 can include, or can optionally be combined with the subject matter of one or any combination of Examples 1-18 to include, subject matter (such as an apparatus, a method, a means for performing acts, or a machine readable medium including instructions that, when performed by the machine, that can cause the machine to perform acts), such as can include sensing a change in an electrical characteristic of a first antenna, obtaining information indicative of the presence or absence of human tissue within a specified range of the first antenna using the sensed change in the electrical characteristic of the first antenna, controllably inhibiting transmission by the first antenna and permitting transmission by the second antenna, in response to the obtained information that human tissue is present within the specified range of the first antenna.

Example 20 can include, or can optionally be combined with the subject matter of Example 15, to optionally include permitting the first antenna to receive wireless information electromagnetically despite the presence of human tissue within the specified range, and adjusting a transmission power used by one or more of the first or second antennas in response to the obtained information that human tissue is present within a specified range of both the first and second antennas, the transmission power specified to provide a Specific Absorption Rate that falls at or below an exposure threshold established by ANSI/IEEE C95.1-1992.

Example 21 can include, or can optionally be combined with any portion or combination of any portions of any one or more of Examples 1-20 to include, subject matter that can include means for performing any one or more of the functions of Examples 1-20, or at least one machine-readable medium including instructions that, when performed by a machine, cause the machine to perform any one or more of the functions of Examples 1-20.

Each of these non-limiting examples can stand on its own, or can be combined in any permutation or combination with any one or more of the other examples.

The above detailed description includes references to the accompanying drawings, which form a part of the detailed description. The drawings show, by way of illustration, specific embodiments in which the invention may be practiced. These embodiments are also referred to herein as "examples." Such examples may include elements in addition to those shown or described. However, the present inventor also contemplates examples in which only those elements shown or described are provided. Moreover, the present inventor also contemplates examples using any combination or permutation of those elements shown or described (or one or more aspects thereof), either with respect to a particular example (or one or more aspects thereof), or with respect to other examples (or one or more aspects thereof) shown or described herein which fall within the scope of the appended claims.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein may be machine or computer-implemented at least in part. Some examples may include at least one computer-readable medium or machine-readable medium encoded with instructions operable to configure an electronic device to perform methods as described in the above examples. An implementation of such methods may include code, such as microcode, assembly language code, a higher-level language code, or the like. Such code may include computer readable instructions for performing various methods. The code may form portions of computer program products. Further, in an example, the code may be tangibly stored on one or more volatile, non-transitoiy, or non-volatile tangible computer-readable media, such as during execution or at other times. Examples of these tangible computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments may be used, such as by one of ordinary skill in the art upon reviewing the above description. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments may be combined with each other in various combinations or permutations. The scope of the invention should be determined with reference to the appended claims.

## Claims

1. A portable wireless device (200) comprising:
a tissue proximity detection circuit (114) to provide (404, 406) information indicative of a presence or absence of human tissue within a specified range of each of a first antenna (124A) and a second antenna (124B), the tissue proximity detection circuit arranged to indicate:
a first configuration when the information indicates that human tissue is absent within the specified range of the second antenna, or
a second configuration when the information indicates that human tissue is present within the specified range of the second antenna and absent within the specified range of the first antenna, or
a third configuration when the information indicates that human tissue is present within the specified range of the second antenna and present within the specified range of the first antenna;
an antenna control circuit (106) arranged:
in response to the first configuration of the tissue proximity detection circuit, to
permit (402) reception by the first antenna and the second antenna,
controllably inhibit (402) transmission by the first antenna and permit (402) transmission at full power by the second antenna;
in response to the second configuration of the tissue proximity detection circuit, to
permit (408) reception by the first antenna and the second antenna;
permit (408) transmission at full power by the first antenna, and
controllably inhibit (408) transmission by the second antenna;
in response to the third configuration of the tissue proximity detection circuit, to
permit reception by the first antenna and the second antenna,
throttle (410) transmitter power to the first antenna and the second antenna; and
a wireless communication circuit (116) communicatively coupled to the antenna control circuit, the wireless communication circuit is arranged to wirelessly transfer information using:
in response to the first configuration of the tissue proximity detection circuit, the first and second antennas for reception and the second antenna for transmission at full power; and
in response to the second configuration of the tissue proximity detection circuit, the first and second antennas for reception and the first antenna for transmission at full power.

2. The portable wireless device of claims 1, comprising:
a housing (128);
wherein the first antenna is located on a first edge (126A) of the housing, and wherein the second antenna is located on a second or third edge (126B; 126C) of the housing.

3. The portable wireless device of claim 2, wherein the housing includes a tablet device housing, and wherein the first antenna is located on a first edge which in use is in or near a position on or near a body of a user; and
wherein the second antenna is located on a second edge which in use is more distal to the position on or near the body of the user.

4. The portable wireless device of claim 2, wherein the housing includes a tablet device housing;
wherein the first antenna is located on a first edge and the second antenna is located on a second edge (126B); and
wherein the first and second edges are substantially perpendicular to each other.

5. The portable wireless device of claim 2, wherein the housing includes a tablet device housing;
wherein the first antenna is located on a first edge and the second antenna is located on a third edge (126C); and
wherein the first and third edges are located opposite each other.

6. The portable wireless device of claim 1, wherein the tissue proximity detection circuit is configured to detect a presence or absence of human tissue within the specified range using a proximity detector (122A, 122B) comprising one or more of an optical tissue sensor, a conductive tissue sensor, or an acoustic tissue sensor.

7. The portable wireless device of claim 1, wherein the tissue proximity detection circuit is configured to detect a presence or absence of human tissue within the specified range via monitoring one or more electrical characteristics of the first antenna to detect the presence or absence of tissue.

8. The portable wireless device of claim 7, wherein the one or more electrical characteristics include one or more of an input impedance of the first antenna or a return loss of the first antenna.

9. The portable wireless device of claim 1, wherein the antenna control circuit is electrically coupled to a mechanical or a solid-state switch; and
wherein the antenna control circuit is configured to controllably inhibit transmission by the first antenna using the switch.

10. The portable wireless device of claim 1, wherein the wireless communication circuit is configured to wirelessly transfer digital information electromagnetically between the portable wireless device and a remote apparatus in accordance with at least one of a second-generation, 2G, a third-generation, 3G, or a fourth-generation, 4G, digital wireless communication standard.

11. A method for antenna selection in a portable wireless device, the method comprising:
providing (404, 406), by a tissue proximity detection circuit (114), information indicative of a presence or absence of human tissue within a specified range of each of a first antenna (124A) and a second antenna (124B), the tissue proximity detection circuit indicating:
a first configuration when the information indicates that human tissue is absent within the specified range of the second antenna, or
a second configuration when the information indicates that human tissue is present within the specified range of the second antenna and absent within the specified range of the first antenna, or
a third configuration when the information indicates that human tissue is present within the specified range of the second antenna and present within the specified range of the first antenna; controlling (402, 408, 410), by an antenna control circuit (106):
in response to the first configuration of the tissue proximity detection circuit,
permitting (402) reception by the first and second antennas,
controllably inhibiting (402) transmission by the first antenna and permitting (402) transmission at full power by the second antenna;
in response to the second configuration of the tissue proximity detection circuit,
permitting (408) reception by the first antenna and the second antenna;
permitting (408) transmission at full power by the first antenna, and
controllably inhibiting (408) transmission by the second antenna;
in response to the third configuration of the tissue proximity detection circuit,
permitting reception by the first antenna and the second antenna,
throttle (410) transmitter power to the first antenna and the second antenna; and
wirelessly transferring information, by a wireless communication circuit (116) communicatively coupled to the antenna control circuit, using:
in response to the first configuration of the tissue proximity detection circuit, the first and second antennas for reception and the second antenna for transmission at full power; and
in response to the second configuration of the tissue proximity detection circuit, the first and second antennas for reception and the first antenna for transmission at full power.

## Patentansprüche

1. Tragbare drahtlose Vorrichtung (200), umfassend:
eine Gewebenähedetektierschaltung (114), um Informationen bereitzustellen (404, 406), die ein Vorhandensein oder Nichtvorhandensein von menschlichem Gewebe innerhalb eines festgelegten Bereichs von jeder aus der Gruppe umfassend eine erste Antenne (124A) und eine zweite Antenne (124B) angeben, wobei die Gewebenähedetektierschaltung angeordnet ist, um anzugeben:
eine erste Konfiguration, wenn die Informationen angeben, dass menschliches Gewebe innerhalb des festgelegten Bereichs der zweiten Antenne nicht vorhanden ist, oder
eine zweite Konfiguration, wenn die Informationen angeben, dass menschliches Gewebe innerhalb des festgelegten Bereichs der zweiten Antenne vorhanden ist und innerhalb des festgelegten Bereichs der ersten Antenne nicht vorhanden ist, oder
eine dritte Konfiguration, wenn die Informationen angeben, dass menschliches Gewebe innerhalb des festgelegten Bereichs der zweiten Antenne vorhanden ist und innerhalb des festgelegten Bereichs der ersten Antenne vorhanden ist;
eine Antennensteuerungsschaltung (106), die angeordnet ist, um:
als Reaktion auf die erste Konfiguration der Gewebenähedetektierschaltung
Empfang durch die erste Antenne und die zweite Antenne zu gestatten (402),
Senden durch die erste Antenne steuerbar zu sperren (402) und
Senden mit voller Leistung durch die zweite Antenne zu gestatten (402);
als Reaktion auf die zweite Konfiguration der Gewebenähedetektierschaltung
Empfang durch die erste Antenne und die zweite Antenne zu gestatten (408),
Senden mit voller Leistung durch die erste Antenne zu gestatten (408) und
Senden durch die zweite Antenne steuerbar zu sperren (408);
als Reaktion auf die dritte Konfiguration der Gewebenähedetektierschaltung
Empfang durch die erste Antenne und die zweite Antenne zu gestatten,
die Sendeleistung zu der ersten Antenne und der zweiten Antenne zu drosseln (410); und
eine Drahtloskommunikationsschaltung (116), die mit der Antennensteuerungsschaltung kommunikativ gekoppelt ist, wobei die Drahtloskommunikationsschaltung angeordnet ist, um Informationen drahtlos zu übertragen durch Verwendung von:
als Reaktion auf die erste Konfiguration der Gewebenähedetektierschaltung, der ersten und der zweiten Antenne zum Empfang und der zweiten Antenne zum Senden mit voller Leistung; und,
als Reaktion auf die zweite Konfiguration der Gewebenähedetektierschaltung, der ersten und der zweiten Antenne zum Empfang und der ersten Antenne zum Senden mit voller Leistung.

2. Tragbare drahtlose Vorrichtung nach Anspruch 1, umfassend:
ein Gehäuse (128);
wobei die erste Antenne an einem ersten Rand (126A) des Gehäuses angeordnet ist und wobei die zweite Antenne an einem zweiten oder dritten Rand (126B; 126C) des Gehäuses angeordnet ist.

3. Tragbare drahtlose Vorrichtung nach Anspruch 2,
wobei das Gehäuse ein Tablettvorrichtungsgehäuse umfasst und wobei die erste Antenne an einem ersten Rand angeordnet ist, der bei Verwendung in oder nahe einer Position an oder nahe einem Körper eines Benutzers ist; und
wobei die zweite Antenne an einem zweiten Rand angeordnet ist, der bei Verwendung distaler zu der Position an oder nahe dem Körper des Benutzers ist.

4. Tragbare drahtlose Vorrichtung nach Anspruch 2,
wobei das Gehäuse ein Tablettvorrichtungsgehäuse umfasst;
wobei die erste Antenne an einem ersten Rand und die zweite Antenne an einem zweiten Rand (126B) angeordnet ist; und
wobei der erste und der zweite Rand im Wesentlichen im rechten Winkel zueinander verlaufen.

5. Tragbare drahtlose Vorrichtung nach Anspruch 2,
wobei das Gehäuse ein Tablettvorrichtungsgehäuse umfasst;
wobei die erste Antenne an einem ersten Rand und die zweite Antenne an einem dritten Rand (126C) angeordnet ist; und
wobei der erste und der dritte Rand einander gegenüberliegend angeordnet sind.

6. Tragbare drahtlose Vorrichtung nach Anspruch 1,
wobei die Gewebenähedetektierschaltung dazu ausgebildet ist, ein Vorhandensein oder Nichtvorhandensein von menschlichem Gewebe innerhalb des festgelegten Bereichs mittels eines Näherungsdetektors (122A, 122B) zu detektieren, der einen oder mehrere aus der Gruppe umfassend einen optischen Gewebesensor, einen leitfähigen Gewebesensor und einen akustischen Gewebesensor umfasst.

7. Tragbare drahtlose Vorrichtung nach Anspruch 1,
wobei die Gewebenähedetektierschaltung dazu ausgebildet ist, ein Vorhandensein oder Nichtvorhandensein von menschlichem Gewebe innerhalb des festgelegten Bereichs durch Überwachen einer oder mehrerer elektrischer Eigenschaften der ersten Antenne, um das Vorhandensein oder Nichtvorhandensein von Gewebe zu detektieren, zu detektieren.

8. Tragbare drahtlose Vorrichtung nach Anspruch 7,
wobei die eine oder mehreren elektrischen Eigenschaften eine oder mehrere aus der Gruppe umfassend eine Eingangsimpedanz der ersten Antenne und eine Rückflussdämpfung der ersten Antenne umfassen.

9. Tragbare drahtlose Vorrichtung nach Anspruch 1,
wobei die Antennensteuerungsschaltung mit einem mechanischen Schalter oder einem Halbleiterschalter elektrisch gekoppelt ist; und
wobei die Antennensteuerungsschaltung dazu ausgebildet ist, Senden durch die erste Antenne mittels des Schalters steuerbar zu sperren.

10. Tragbare drahtlose Vorrichtung nach Anspruch 1,
wobei die Drahtloskommunikationsschaltung dazu ausgebildet ist, digitale Informationen drahtlos elektromagnetisch zwischen der tragbaren drahtlosen Vorrichtung und einer abgesetzten Vorrichtung gemäß mindestens einer aus der Gruppe umfassend eine digitale Zweitgenenerations(2G)-, eine digitale Drittgenerations(3G)- und eine digitale Viertgenerations(4G)- Drahtloskommunikationsnorm zu übertragen.

11. Verfahren zur Antennenauswahl in einer tragbaren drahtlosen Vorrichtung, wobei das Verfahren umfasst:
Bereitstellen (404, 406), durch eine Gewebenähedetektierschaltung (114), von Informationen, die ein Vorhandensein oder Nichtvorhandensein von menschlichem Gewebe innerhalb eines festgelegten Bereichs von jeder aus der Gruppe umfassend eine erste Antenne (124A) und eine zweite Antenne (124B) angeben, wobei die Gewebenähedetektierschaltung angibt:
eine erste Konfiguration, wenn die Informationen angeben, dass menschliches Gewebe innerhalb des festgelegten Bereichs der zweiten Antenne nicht vorhanden ist, oder
eine zweite Konfiguration, wenn die Informationen angeben, dass menschliches Gewebe innerhalb des festgelegten Bereichs der zweiten Antenne vorhanden ist und innerhalb des festgelegten Bereichs der ersten Antenne nicht vorhanden ist, oder
eine dritte Konfiguration, wenn die Informationen angeben, dass menschliches Gewebe innerhalb des festgelegten Bereichs der zweiten Antenne vorhanden ist und innerhalb des festgelegten Bereichs der ersten Antenne vorhanden ist;
Steuern (402, 408, 410), durch eine Antennensteuerungsschaltung (106):
als Reaktion auf die erste Konfiguration der Gewebenähedetektierschaltung,
Gestatten (402) von Empfang durch die erste Antenne und die zweite Antenne,
steuerbares Sperren (402) von Senden durch die erste Antenne und
Gestatten (402) von Senden mit voller Leistung durch die zweite Antenne;
als Reaktion auf die zweite Konfiguration der Gewebenähedetektierschaltung,
Gestatten (408) von Empfang durch die erste Antenne und die zweite Antenne,
Gestatten (408) von Senden mit voller Leistung durch die erste Antenne und
steuerbares Sperren (408) von Senden durch die zweite Antenne;
als Reaktion auf die dritte Konfiguration der Gewebenähedetektierschaltung,
Gestatten von Empfang durch die erste Antenne und die zweite Antenne,
Drosseln (410) der Sendeleistung zu der ersten Antenne und der zweiten Antenne; und
drahtloses Übertragen von Informationen durch eine Drahtloskommunikationsschaltung (116), die mit der Antennensteuerungsschaltung kommunikativ gekoppelt ist, durch Verwendung von:
als Reaktion auf die erste Konfiguration der Gewebenähedetektierschaltung, der ersten und der zweiten Antenne zum Empfang und der zweiten Antenne zum Senden mit voller Leistung; und,
als Reaktion auf die zweite Konfiguration der Gewebenähedetektierschaltung, der ersten und der zweiten Antenne zum Empfang und der ersten Antenne zum Senden mit voller Leistung.

## Revendications

1. Dispositif portable sans fil (200) comprenant :
un circuit de détection de proximité de tissu (114) pour fournir (404, 406) des informations révélatrices d'une présence ou absence de tissu humain à l'intérieur d'une portée spécifiée à la fois d'une première antenne (124A) et d'une deuxième antenne (124B), le circuit de détection de proximité de tissu étant agencé pour indiquer :
une première configuration quand les informations indiquent qu'un tissu humain est absent à l'intérieur de la portée spécifiée de la deuxième antenne, ou
une deuxième configuration quand les informations indiquent qu'un tissu humain est présent à l'intérieur de la portée spécifiée de la deuxième antenne et absent à l'intérieur de la portée spécifiée de la première antenne, ou
une troisième configuration quand les informations indiquent qu'un tissu humain est présent à l'intérieur de la portée spécifiée de la deuxième antenne et présent à l'intérieur de la portée spécifiée de la première antenne ;
un circuit de contrôle d'antennes (106) agencé :
en réponse à la première configuration du circuit de détection de proximité de tissu, pour
permettre (402) la réception par la première antenne et la deuxième antenne,
empêcher de façon contrôlable (402) l'émission par la première antenne et
permettre (402) l'émission à pleine puissance par la deuxième antenne ;
en réponse à la deuxième configuration du circuit de détection de proximité de tissu, pour
permettre (408) la réception par la première antenne et la deuxième antenne,
permettre (408) l'émission à pleine puissance par la première antenne, et
empêcher de façon contrôlable (408) l'émission par la deuxième antenne ;
en réponse à la troisième configuration du circuit de détection de proximité de tissu, pour
permettre la réception par la première antenne et la deuxième antenne,
réduire (410) la puissance d'émission de la première antenne et de la deuxième antenne ; et
un circuit de communication sans fil (116) couplé de façon communicante au circuit de contrôle d'antennes, le circuit de communication sans fil étant agencé pour transférer sans fil des informations en utilisant :
en réponse à la première configuration du circuit de détection de proximité de tissu, les première et deuxième antennes pour la réception et la deuxième antenne pour l'émission à pleine puissance ; et
en réponse à la deuxième configuration du circuit de détection de proximité de tissu, les première et deuxième antennes pour la réception et la première antenne pour l'émission à pleine puissance.

2. Dispositif portable sans fil de la revendication 1, comprenant :
un boîtier (128) ;
dans lequel la première antenne est située sur un premier bord (126A) du boîtier, et dans lequel la deuxième antenne est située sur un deuxième ou troisième bord (126B ; 126C) du boîtier.

3. Dispositif portable sans fil de la revendication 2,
dans lequel le boîtier comporte un boîtier de dispositif formant tablette, et dans lequel la première antenne est située sur un premier bord qui à l'usage est dans ou près d'une position sur ou près d'un corps d'un utilisateur ; et
dans lequel la deuxième antenne est située sur un deuxième bord qui à l'usage est plus distal de la position sur ou près du corps de l'utilisateur.

4. Dispositif portable sans fil de la revendication 2, dans lequel le boîtier comporte un boîtier de dispositif formant tablette ;
dans lequel la première antenne est située sur un premier bord et la deuxième antenne est située sur un deuxième bord (126B) ; et
dans lequel les premier et deuxième bords sont sensiblement perpendiculaires l'un à l'autre.

5. Dispositif portable sans fil de la revendication 2, dans lequel le boîtier comporte un boîtier de dispositif formant tablette ;
dans lequel la première antenne est située sur un premier bord et la deuxième antenne est située sur un troisième bord (126C) ; et
dans lequel les premier et troisième bords sont situés à l'opposé l'un de l'autre.

6. Dispositif portable sans fil de la revendication 1,
dans lequel le circuit de détection de proximité de tissu est configuré pour détecter une présence ou absence de tissu humain à l'intérieur de la portée spécifiée en utilisant un détecteur de proximité (122A, 122B) comprenant un capteur de tissu optique, et/ou un capteur de tissu conducteur, et/ou un capteur de tissu acoustique.

7. Dispositif portable sans fil de la revendication 1,
dans lequel le circuit de détection de proximité de tissu est configuré pour détecter une présence ou absence de tissu humain à l'intérieur de la portée spécifiée en surveillant une ou plusieurs caractéristiques électriques de la première antenne pour détecter la présence ou l'absence de tissu.

8. Dispositif portable sans fil de la revendication 7,
dans lequel la ou les caractéristiques électriques comportent une impédance d'entrée de la première antenne et/ou un affaiblissement d'adaptation de la première antenne.

9. Dispositif portable sans fil de la revendication 1,
dans lequel le circuit de contrôle d'antennes est couplé électriquement à un commutateur mécanique ou à semiconducteurs ; et
dans lequel le circuit de contrôle d'antennes est configuré pour empêcher de façon contrôlable l'émission par la première antenne en utilisant le commutateur.

10. Dispositif portable sans fil de la revendication 1, dans lequel le circuit de communication sans fil est configuré pour transférer sans fil des informations numériques par voie électromagnétique entre le dispositif portable sans fil et un appareil distant conformément à une norme de communication sans fil numérique de deuxième génération, 2G, et/ou de troisième génération, 3G, et/ou de quatrième génération, 4G.

11. Procédé de sélection d'antennes dans un dispositif portable sans fil, le procédé comprenant :
la fourniture (404, 406), par un circuit de détection de proximité de tissu (114), d'informations révélatrices d'une présence ou absence de tissu humain à l'intérieur d'une portée spécifiée à la fois d'une première antenne (124A) et d'une deuxième antenne (124B), le circuit de détection de proximité de tissu indiquant :
une première configuration quand les informations indiquent qu'un tissu humain est absent à l'intérieur de la portée spécifiée de la deuxième antenne, ou
une deuxième configuration quand les informations indiquent qu'un tissu humain est présent à l'intérieur de la portée spécifiée de la deuxième antenne et absent à l'intérieur de la portée spécifiée de la première antenne, ou
une troisième configuration quand les informations indiquent qu'un tissu humain est présent à l'intérieur de la portée spécifiée de la deuxième antenne et présent à l'intérieur de la portée spécifiée de la première antenne ;
le contrôle (402, 408, 410), par un circuit de contrôle d'antennes (106), des opérations suivantes :
en réponse à la première configuration du circuit de détection de proximité de tissu,
permettre (402) la réception par les première et deuxième antennes,
empêcher de façon contrôlable (402) l'émission par la première antenne et
permettre (402) l'émission à pleine puissance par la deuxième antenne ;
en réponse à la deuxième configuration du circuit de détection de proximité de tissu,
permettre (408) la réception par la première antenne et la deuxième antenne,
permettre (408) l'émission à pleine puissance par la première antenne, et
empêcher de façon contrôlable (408) l'émission par la deuxième antenne ;
en réponse à la troisième configuration du circuit de détection de proximité de tissu,
permettre la réception par la première antenne et la deuxième antenne,
réduire (410) la puissance d'émission de la première antenne et de la deuxième antenne ; et
le transfert sans fil d'informations, par un circuit de communication sans fil (116) couplé de façon communicante au circuit de contrôle d'antennes, en utilisant :
en réponse à la première configuration du circuit de détection de proximité de tissu, les première et deuxième antennes pour la réception et la deuxième antenne pour l'émission à pleine puissance ; et
en réponse à la deuxième configuration du circuit de détection de proximité de tissu, les première et deuxième antennes pour la réception et la première antenne pour l'émission à pleine puissance.
